# EUROPEAN PATENT APPLICATION

(11) **EP 0 715 974 A1**
(43) Date of publication of application: **12.06.1996**
(21) Application number: 95202920.5
(22) Date of filing: 30.10.1995
(51) Int. Cl.: B60C 11/18, B60C 11/00, B60C 1/00

(54) **Triplex tread**

(30) Priority: 07.11.1994 US 335293
(71) Applicant: THE GOODYEAR TIRE & RUBBER COMPANY, Akron, Ohio 44316-0001 (US)
(72) Inventor: Gabor, Jennifer Leigh, Cuyahoga Falls, OH 44221 (US); Rodgers, Michael Brendan, Akron, OH 44333 (US)
(74) Representative: Leitz, Paul

(57) **Abstract**

By providing a tread **(16)** that has increased wear properties as the tire **(10)** is worn, the pattern of irregular wear can be broken or minimized. The tire **(10)** of the invention comprises a tread **(16)** that has at least two layers **(22,24,26)** of rubber having different moduli, wherein the layer of rubber having the lower modulus is at the surface of the tread.

## Description

### BACKGROUND

This invention relates to tires made for highway use.

Radial medium truck tires with a rib tread pattern generally have a pressure distribution groove or decoupling groove in the shoulder region of the tire. The purpose of this groove is to relieve pressure in the shoulder area of the footprint and to optimize the tire footprint pressure so as to prevent tread scrubbing on the road or highway surface. Scrubbing can lead to the onset of abnormal wear patterns such as shoulder wear, erosion wear on the outer ribs of the tread, localized shoulder wear leading to diagonal wiping of the tread face, and high-low wear patterns in the shoulder, also described as 'island wear'.

Even with pressure distribution grooves, radial truck tires can still display irregular wear due to poor vehicle alignment conditions, uneven load distribution on the front axle, or road conditions.

When irregular wear is initiated in a tire, the imbalance in the tire caused by the wear tends to increase the scrubbing and accelerate the wear.

It is an object of the present invention to increase the wear life of a tire by breaking the irregular wear pattern. Those skilled in the art will recognize other objects of the invention from the following description and claims.

### SUMMARY OF THE INVENTION

A pneumatic tire is provided comprising at least a pair of substantially parallel annular beads, at least one carcass ply wrapped around the beads, a tread disposed over the at least one carcass ply in a crown area of the tire and sidewalls disposed between the tread and the beads. The tread comprises a plurality of radially disposed density zones wherein each density zone has an axial width substantially equal to the axial width of the tread. Each density zone has physical properties of Shore A hardness, modulus, rebound, elongation, wear properties and abrasion resistance, which are different from an adjacent density zone. The radially outermost density zone has the lowest abrasion resistance properties and the radially innermost density zone has the highest abrasion resistance properties. In an illustrated embodiment, the tread has three density zones.

In an illustrated embodiment of the tire and tread, a first density zone comprises 10 to 80% of the tread thickness, a second density zone comprises 10 to 80% of the tread thickness and a third density zone comprises 10 to 80% of the tread thickness. The radially outermost (first) density zone has a tensile modulus at 300% elongation of 6 to 14 MPa; the intermediate (second) density zone has a tensile modulus at 300% elongation of 10 to 16 MPa; and the radially innermost (third) density zone has a tensile modulus at 300% elongation of 12 to 18 MPa.

In one embodiment, each of the zones has the same rubber formula except for the amount of carbon black used as reinforcement, each zone containing incrementally more carbon black than the zone radially above, the first density zone comprising 20 to 50 phr carbon black, the second density zone comprising 30 to 60 phr carbon black, and the third density zone comprising 40 to 70 phr carbon black.

In another embodiment, each of the zones has the same rubber formula except for the kind of carbon black used as reinforcement, each zone containing an incrementally more stiff rubber than the zone radially above, the first density zone comprising 30 to 60 phr HAF carbon black, the second density zone comprising 30 to 60 phr ISAF carbon black, and the third density zone comprising 30 to 60 phr SAF carbon black.

A tread used with the pneumatic tire is also claimed.

### BRIEF DESCRIPTION OF THE DRAWINGS

**Fig. 1** illustrates a front view cross section of a tire and tread of the invention.

**Fig. 2** illustrates a front view cross section of an alternative embodiment of a tire and tread of the invention.

### DETAILED DESCRIPTION OF THE INVENTION

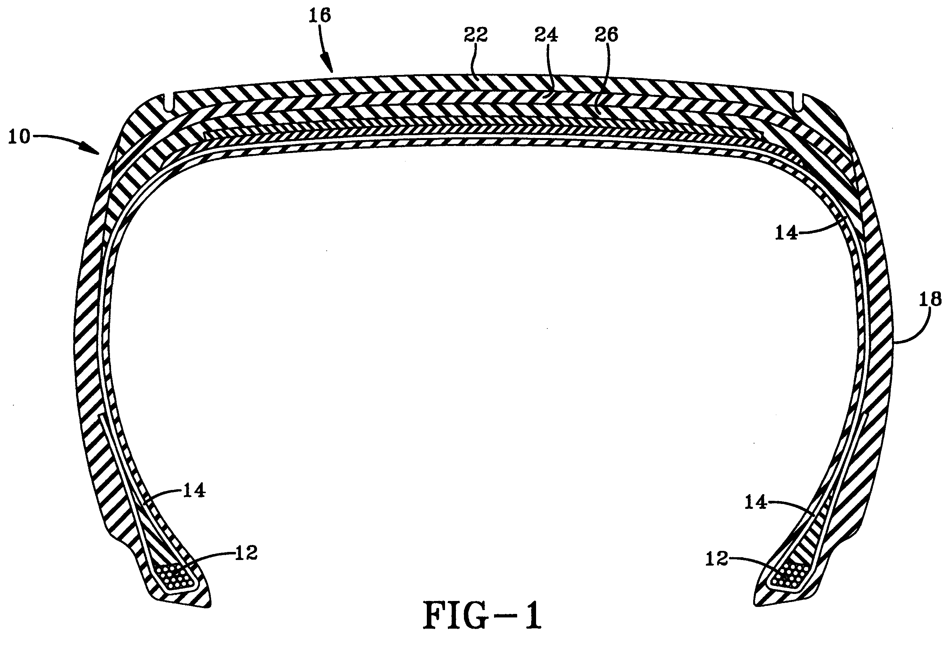

Although this invention can be used with any type of tire which can be used on a road surface, the invention is described specifically as it relates to a radial medium truck tire, typically of 19.5", 22.5", or 24.5" diameter, with a rib tread pattern, and a pressure distribution groove. Fig. 1 illustrates a tire of the invention. The description is directed specifically to resistance of irregular wear in such tires.

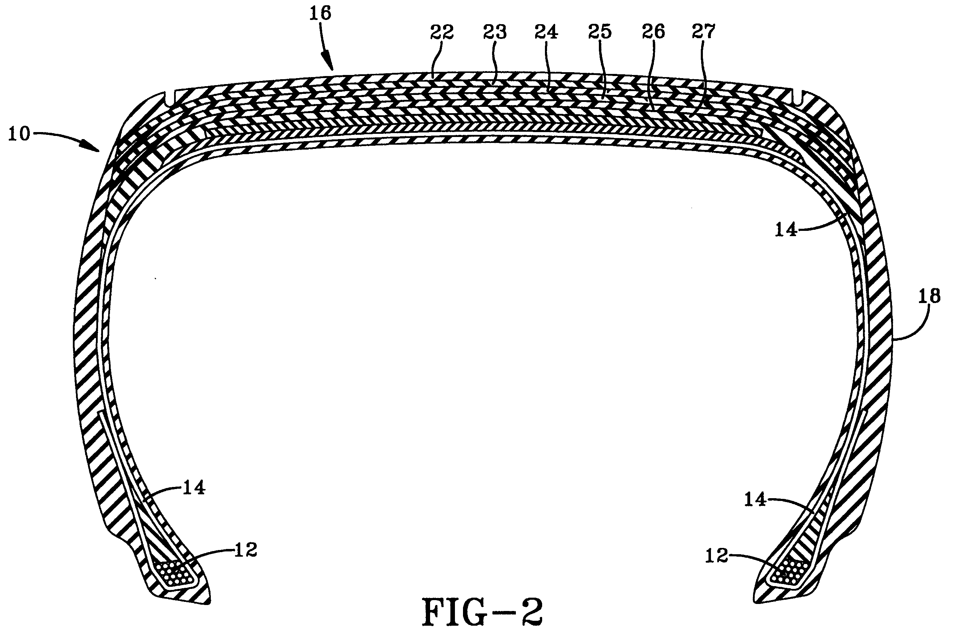

With reference now to Figs. 1 and 2, tire 10 comprises a pair of parallel annular beads 12, at least one carcass ply 14 wrapped around said beads, tread 16 disposed over said at least one carcass ply in a crown area of the tire, and sidewalls 18 disposed between the tread and the beads.

In general, it is believed that the kinds of tires that can be utilized in the invention will have 1 to 3 carcass plies and 1 to 4 belt plies.

In the conception of the invention, it was theorized that since irregular wear tends to accelerate once it has begun, that if a means is provided to stop irregular wear in the regions where it has begun, and to permit wear on the rest of the tread to "catch up", that overall, more consistent and even wear can be obtained.

This is achieved by using a zoned or tiered tread lay-up where each of the compounds in the tread have different rates of wear. The fastest wearing tread compound is at the radially outermost portion of the tread, sequentially radially inner zones being characterized by slower wearing compounds.

When scrubbing causes one region of the tread to wear down prematurely, and the wear rate slows as the wear goes deeper into the tread, the less worn portions of tread having the faster wear rate have the opportunity to wear down to the same level as the scrubbed portion of the tire, and since experience has shown that irregular wear decreases as a tire is "broken-in", the wear of the tire becomes more even as the tire is used. Even wear should extend the overall life of the tire, and may improve the retreadability of the tire.

The invention may comprise two to six layers of tread rubber, preferably three to six layers of tread rubber, wherein the modulus of each layer of rubber is greater than the modulus of the layer of rubber radially above. With reference to Fig. 1, a tire and tread are provided wherein the tread has three layers 22,24,26 of tread rubber wherein the three layers of tread are co-extruded using a triplex extruder. Fig. 2 illustrates an embodiment where six layers 22,23,24,25,26,27 of tread rubber are used to form the tread.

With the triplex extruder, it is possible to create a tread which has three zones, each zone comprising approximately 1/3 of the tread compound volume. In an embodiment such as shown in Fig. 2, two extrusions may be necessary to form the tread. Those skilled in the art will recognize that the thickness of the zones may be varied depending on the use expected for a given tire. Generally, it is believed that the invention can be used where each zone comprises 10% to 80% of the tread depth, preferably 15% to 60% of the tread depth.

In one embodiment of the invention, the modulus of the tread compounds can be varied by increasing the amount of carbon black used in each zone of the tread.

In another embodiment, the modulus can be increased by using different types of carbon black in each zone of the tread.

Those skilled in the art will recognize that other means are available for changing the modulus of rubber compounds and, of course, the invention may be used employing different rubbers having different physical properties for each zone of the tread.

In a first illustrated embodiment of the invention, an SAF carbon black having a particle size of 11-19 nm, a CTAB of 120-135, DBP absorption of 110-140 and a tint strength of 115-135 is used. In the illustrated embodiment of Fig. 1, 20 to 50 PHR SAF black is used in the radially outermost layer 22 of the tread, 30 to 60 PHR SAF black is used in the intermediate layer 24 of the tread, and 40 to 70 PHR SAF black is used in the radially innermost layer 26 of the tread. The three compounds thus formed respectively have a tensile modulus at 300% elongation of 6 to 14 MPa, 10 to 16 MPa and 12 to 18 MPa; preferably 8 to 12 MPa, 12 to 14 MPa and 14 to 16 MPa.

Those skilled in the art will recognize that lower modulus values are more applicable to automobile tires (13,14 and 15 inches in diameter), and the higher end of the ranges of values are more applicable to radial medium truck (RMT) tires.

Referring again to Fig. 1, in a second illustrated embodiment of the invention, the same amount of black is used in each layer of tread, but the nature or kind of black in the tread compound is varied. In the second illustrated embodiment, 40 to 60 PHR of carbon black is used. In the radially outermost layer, an HAF black having a particle size of 26-30 nm, a CTAB of 65-105, a DBP absorption of 70-130, and a tint strength of 95-120 is used. In the intermediate layer, an ISAF black having a particle size of 20-25 nm, a CTAB of 100-120, a DBP absorption of 90-130 and a tint strength of 110-130 is used. In the radially innermost layer, an SAF black is used having properties described above. In general, the compounds produced using the HAF black have a tensile modulus at 300% elongation of 6 to 14 MPa preferably 8 to 12 MPa. The compounds produced using the ISAF black have a tensile modulus of 300% elongation of 10 to 16 MPa, preferably 12 to 14 MPa, and the compounds made using the SAF black have a tensile modulus at 300% elongation of 12 to 18 MPa, preferably 14 to 16 MPa.

Those skilled in the art will recognize that different loadings of different kinds of carbon blacks, or other fillers, such as silica, can also be used, the properties of the various rubber compounds in the different zones being most important, as compared to the means by which they are achieved, in the operation of the invention.

The sulfur cured rubber compositions used in the tire and tread of the invention contain a natural or synthetic diene derived rubber. Although natural rubber is preferred, representative of the rubbers that may be used in tread and other various parts of the tire include medium vinyl polybutadiene, styrene-butadiene rubber, synthetic cis-1,4-polyisoprene, synthetic 3,4-polyisoprene, cis-polybutadiene, styrene-isoprene rubber, styrene-isoprene-butadiene rubber, acrylonitrile-butadiene rubber and mixtures thereof.

In addition to the above, the sulfur cured rubber composition may contain conventional additives including reinforcing agents, fillers, peptizing agents, pigments, stearic acid, accelerators, sulfur vulcanizing agents, antiozonants, antioxidants, processing oils, activators, initiators, plasticizers, waxes, prevulcanization inhibitors, extender oils and the like.

Representative of reinforcing agents is carbon black, which is typically added in amounts ranging from 5 to 100 parts by weight based on 100 parts by weight of total rubber (phr). Carbon black is normally used in amounts ranging from 75 to 85 phr. Typical carbon blacks that are used include N110, N121, N220, N231, N234, N242, N293, N299, N326, N330, M332, N339, N343, N347, N351, N358, N375, N472, N539, N550, N660, N683, N754, and N765.

Representative of conventional accelerators are amines, guanidines, thioureas, thiols, thiurams, sulfenamides, dithiocarbamates and xanthates which are typically added in amounts of from 0.2 to 5 phr.

Representative of sulfur vulcanizing agents include element sulfur (free sulfur) or sulfur donating vulcanizing agents, for example, an amine disulfide, polymeric polysulfide or sulfur olefin adducts. The amount of sulfur vulcanizing agent will vary depending on the type of rubber and particular type of sulfur vulcanizing agent but generally range from 0.1 phr to 5 phr with a range of from 0.5 phr to 2 phr being preferred.

Representative of the antidegradants which may be in the rubber composition include microcrystalline was, paraffinic was, monophenols, bisphenols, thiobisphenols, polyphenols, hydroquinone derivatives, phosphites, phosphate blends, thioesters, naphthylamines, diphenol amines a well as other diaryl amine derivatives, para-phenylene diamines, quinolines and blended amines. Antidegradants are generally used in an amount ranging from 0.1 phr to 10 phr with a range of from 4 to 6 phr being preferred.

Representative of a peptizing agent that may be used is pentachlorophenol which may be used in an amount ranging from 0.1 phr to 0.4 phr with a range of from 0.2 to 0.3 phr being preferred.

Representative of processing oils which may be used in the rubber composition of the present invention include activated dithio-bisbenzanilide, poly-para-dinitrosobenzene, xylyl mercaptans, aliphatic-naphthenic aromatic resins, polyethylene glycol, petroleum oils, ester plasticizers, vulcanized vegetable oils, pine tar, phenolic resins, petroleum resins, polymeric esters and rosins. These processing oils may be used in a conventional amount ranging from 0 to 10 phr with a range of from 5 to 10 phr being preferred.

Representative of an initiators that may be used is stearic acid. Initiators are generally used in a conventional amount ranging from 1 to 4 phr with a range of from 2 to 3 phr being preferred.

Accelerators may be used in a conventional amount. In cases where only a primary accelerator is used, the amounts range from 0.5 to 2.5 phr. In cases where combinations of two or more accelerators are used, the primary accelerator is generally used in amounts ranging from 0.5 to 2.0 phr and a secondary accelerator is used in amounts ranging from 0.1 to 0.5 phr. Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

The invention is further illustrated with reference to the following examples:

### Example 1

This example illustrates the rubber composition that is used throughout the examples, unless otherwise indicated. The composition is varied in each of the examples as indicated. As used in the present example, the composition is varied by changing the amount of carbon black used in the rubber mixture. Compounds A, B, and C are used, respectively in the radially outermost, intermediate, and the radially innermost zone in the tire tread.

The numbers in the right hand column represent the amount of each ingredient in phr.

**TABLE I**

| **RADIAL TRUCK TIRE TREAD COMPOUND** | |
|---|---|
| Natural Rubber (SMR 5) | 100.00 |
| Carbon Black (various) | various |
| Stearic Acid | 2 |
| Zinc Oxide | 3-5 |
| Aromatic Oil | 0-3 |
| Flectol Flakes | 1 |
| Santoflex 13 (6PPD) | 1.5 |
| Microcrystalline wax | 0.5-1 |
| Paraffin wax | 0.5-1 |
| Sulphur | 0.9-1.2 |
| DPG | 0-0.35 |
| TBBS | 0.9-1.1 |

SAF carbon black is used in each rubber formulation used in this example, and as indicated below, 42 phr black is used in the outermost zone of the tread, 49 phr black is used in the intermediate zone of the tread, and 56 phr black is used in the innermost zone of the tread. A control tire is made as is conventional for this type of tire.

The black has the following physical properties. "Tint" represents Tint Strength.

| Carbon black | particle size | CTAB | DBPA | Tint |
|---|---|---|---|---|
| SAF | 11-19 nm | 119-125 | 128-132 | 118-124 |

The compounds made as described above have the physical properties described in **TABLE II**.

**TABLE II**

| Compound | A | B | C |
|---|---|---|---|
| black loading | 42phr | 49phr | 56phr |
| 300% Modulus (Mpa) | 10.2 | 12.5 | 14.2 |
| elongation (%) | 528 | 495 | 433 |
| hot rebound (%) | 59.1 | 55.2 | 49.5 |
| E' at 0° C (MPa) | 24.0 | 38.4 | 46.9 |
| E' at 60° C (MPa) | 14.1 | 20.5 | 24.2 |
| DIN ABRASION | 151 | 142 | 119 |

From the material properties described above, it is predicted that use of a zone tread cap on a truck tire will provide a 10% improvement over a control tire using a single high tear strength tread compound in tire rolling resistance, resistance to irregular wear, maintenance of tread damage resistance, and maintenance of traction performance.

### Example 2

This example illustrates a zoned tread wherein the rubber compositions in each zone are the same except for the kind of carbon black used in the composition.

The SAF black has the properties described in Example 1. The ISAF and HAF blacks have the properties described below.

| Carbon black | particle size | CTAB | DBPA | tint |
|---|---|---|---|---|
| ISAF | 20-25 nm | 98-102 | 112-116 | 113-117 |
| HAF | 26-30 nm | 80-84 | 100-104 | 101-105 |

**TABLE III** illustrates the carbon blacks used in the rubber formulation described in **Example 1**, and some of the properties of the compounds produced when 50 phr black is used.

In the table, modulus data, and E' are given in MPa, and elongation is given in %.

**TABLE III**

| **TIRE TREAD COMPOUND PHYSICAL PROPERTIES** | | | |
|---|---|---|---|
| Compound | 1 | 2 | 3 |
| Natural Rubber | 100 | 100 | 100 |
| Carbon Black 50phr | HAF | ISAF | SAF |
| 300% Modulus | 11.6 | 12.5 | 13.3 |
| Elongation | 513 | 494 | 495 |
| E' at (0°C) | 34.0 | 34.3 | 38.4 |
| E' at (60°C) | 18.3 | 18.2 | 20.5 |

It is expected that, at least at the early stages of use, global treadwear will be increased, but there are expected to be detectable improvements in tire running temperature, irregular wear, and rolling resistance, while other important properties are not diminished.

The data in **TABLE IV** represents the expected properties of a tire made using the compounds of this example, based on the material properties described above, and is normalized with reference to a control, where the control equals 100.

**TABLE IV**

| **TREAD** | **SINGLE HIGH TEAR TREAD** | **ZONED TREAD CAP** |
|---|---|---|
| Tire Running Temperature See Note 1. | 100 | 110 |
| Rolling Resistance See Note 2. | 100 | 110 |
| Wet Skid | 100 | 100 |
| Wet Traction | 100 | 100 |
| Global Tread Wear See Note 3. | 100 | 90 |
| Evenness of Wear See Note 4. Fast Tread Wear | 100 | 115 |
| See Note 5. Damage | 100 | 100 |
| Resistance See Note 6. | 100 | 100 |
| NOTES: 1. Tire running temperature is the tread temperature measured while the tire is at 35 mph with an infrared pyrometer. A higher rating is a lower temperature and is better. 2. Rolling resistance or tire drag rating (higher is better). 3. Global tread wear is the remaining tire tread depth after a defined duration in highway service, typically 60,000 miles. A higher rating is better. 4. Evenness of wear is the standard deviation of tread non-skid or remaining tread depth expressed as a rating (higher is better). 5. Fast wear performance is the rate of wear under severe conditions and simulates city stop-start conditions. 6. Damage resistance is a measure of the resistance to chipping, chunking and cutting after running for a defined distance and duration, typically 8000 miles, on a gravel road. | | |

While the invention has been specifically illustrated and described, those skilled in the art will recognize that the invention may be variously modified and practiced without departing from the scope of the following claims.

## Claims

1. A tread **(16)** for use on a pneumatic tire **(10)** characterized by comprising a plurality of radially disposed density zones **(22-27)** of rubbery material wherein each density zone has an axial width substantially equal to the axial width of said tread **(16)**, and wherein each density zone has physical properties of Shore A hardness, modulus, rebound elongation, wear properties and abrasion resistance, which are different from an adjacent density zone.

2. The tread **(16)** of claim 1 characterized by the radially outermost density zone **(22)** having the lowest abrasion resistance properties and the radially innermost density zone **(27)** having the highest abrasion resistance properties.

3. The tread **(16)** of claim 1 characterized by each of the plurality of density zones **(22-27)** having the same rubber formula except for the amount of reinforcing agent, such as silica or carbon black, wherein each zone contains incrementally more reinforcing agent than the zone radially above.

4. The tread **(16)** of any of claims 1-3 characterized by having from 2 to 6 density zones.

5. The tread **(16)** of claim 1 or 2 characterized by having three density zones **(22,24,26)**.

6. The tread **(16)** of claim 5 characterized by the radially outermost (first) density zone **(22)** comprising 10 to 80% of the tread thickness, the intermediate (second) density zone **(24)** comprising 10 to 80% of the tread thickness and the radially innermost (third) density zone **(26)** comprising 10 to 80% of the tread thickness.

7. The tread **(16)** of claim 5 characterized by the first density zone **(22)** comprising 15 to 60 % of the tread thickness, the second density zone **(24)** comprising 15 to 60 % of the tread thickness and the third density zone **(26)** comprising 15 to 60 % of the tread thickness.

8. The tread **(16)** of claim 5 characterized by the first density zone **(22)** having a tensile modulus at 300% elongation of 6 to 14 MPa; the second density zone **(24)** having a tensile modulus at 300% elongation of 10 to 16 MPa; and the third density zone **(26)** having a tensile modulus at 300% elongation of 12 to 18 MPa.

9. The tread **(16)** of claim 5 characterized by each of the zones **(22,24,26)** having the same rubber formula except for the amount of carbon black used as reinforcing agent, each zone containing incrementally more carbon black than the zone radially above, the first density zone **(22)** comprising 30 to 50 phr carbon black, the second density zone **(24)** comprising 40 to 60 phr carbon black, and the third density zone **(26)** comprising 50 to 70 phr carbon black.

10. The tread **(16)** of claim 5 characterized by each of the zones having the same rubber formula except for the kind of carbon black used as reinforcing agent, each zone containing an incrementally more stiff rubber than the zone radially above, the first density zone **(22)** comprising 30 to 60 phr HAF carbon black, the second density zone **(24)** comprising 30 to 60 phr ISAF carbon black, and the third density zone **(26)** comprising 30 to 60 phr SAF carbon black.

11. A pneumatic tire **(10)** comprising at least a pair of substantially parallel annular beads **(12)**, at least one carcass ply **(14)** wrapped around said beads, a tread **(16)** disposed over said at least one carcass ply **(14)** in a crown area of said tire **(10)** and sidewalls **(18)** disposed between said tread and said beads, characterized by said tread **(16)** being as claimed in any of claims 1 to 10.
